# EUROPEAN PATENT APPLICATION

(11) **EP 1 102 224 A2**
(43) Date of publication of application: **23.05.2001**
(21) Application number: 00125446.5
(22) Date of filing: 20.11.2000
(51) Int. Cl.: G07F 19/00, G06F 17/60

(54) **An automated account opening system and method, and locations for utilizing an automated account opening system and method**

(30) Priority: 20.11.1999 US 443266
(71) Applicant: Canadian Imperial Bank of Commerce, Toronto, Ontario M5L 1A2 (CA)
(72) Inventor: Jabbour, Anthony Michael, Heathrow, Florida 32746 (US); Cassidy, Brian Michael, Oakville, Ontario L6J 4P6 (CA)
(74) Representative: Viering, Jentschura & Partner

(57) **Abstract**

A deposit account application processing network has an applicant system for receiving deposit account application information including applicant identification information and applicant's desired deposit products from an applicant at a non-branch location. The applicant system transforms applicant information into computer-readable deposit account application data. The deposit account application processing network also comprises an automated application processing system for processing the computer-readable deposit account application data from the applicant system which has an automated system for receiving the application data to create a computer-readable qualification request to determine whether or not the applicant is qualified for the desired deposit product. The processing system also has an automated system for receiving a computer-readable response to the qualification request, an automated system for approving the desired deposit product based on the response to the qualification request, and an automated system for opening a deposit account for the approved deposit product, which deposit account is available for access by applicant. The computerized qualification request is processed by a third party system or by the processing system itself. The applicant system may be part of a kiosk with an ATM, Internet terminal, and telephone. The kiosk may be in a retail outlet. The processing system may have Internet and telephone banking interfaces for accessing opened deposit accounts.

## Description

### FIELD OF THE INVENTION

The field of the invention relates generally to systems and methods for opening deposit accounts.

### BACKGROUND OF THE INVENTION

The financial services industry is undergoing significant pressures. Customers have less and less time to manage their money. At the same time, deposit taking institutions, such as banks, thrifts, trusts and other depository institutions covered by federal deposit insurance from the Federal Deposit Insurance Corporation (FDIC) or similar mandatory deposit insurance in other jurisdictions, are facing a slow growing potential customer base with increasing competition from new entrants to the market, and alternate forms of financial services, such as brokerages.

Expansion of traditional branches and the hours they are open is desirable from a customer perspective; however, the costs are simply prohibitive for deposit taking institutions. For example, each bank branch requires certification and must meet numerous requirements of relevant regulatory authorities. These costs are borne by product holders through service fees and lower rates of return on products.

Deposit taking institutions have developed alternative modes of accessing the institution, including Internet banks, telephone banking, and automated teller machines (ATMs). For a bank, processing costs for transactions initiated at a traditional bank branch exceed costs for ATM or Internet banking transactions. A United States study by Booz Allen & Hamilton published in July 1996 entitled "Consumer Demand for Internet Banking" concluded that the average cost of completing a banking transaction through a bank branch was $1.07 compared to $0.27 through an ATM and $0.01 through the Internet. Although these are very useful tools, they do not provide the conveniences that a customer is used to receiving at a branch of a deposit taking institution.

This can be illustrated with reference to procedures for opening deposit accounts at a bank. Banks provide customers with products through which different types of banking services may be provided. For example, a bank may offer basic savings deposit products having modest service fees, with limits on the size, frequency and type of withdrawals and checking deposit products with different limits and access privileges.

Traditionally, to open a bank account, an applicant must attend at a branch of the bank and deal with an appropriate official of the bank. The bank official informs the applicant of products offered by the bank and the applicant selects one or more desired products. Application forms are completed and the application is processed by the bank.

During processing the application is usually evaluated against several metrics to determine whether or not the applicant meets the necessary criteria to hold the products requested. For example, to open a deposit account with overdraft protection the bank may require that the applicant has a good credit history and a minimum amount of funds before opening the account. The status of the applicant may also affect the type of product available to applicant. For example, applicant's age and residence (local or out of jurisdiction) may affect the type of products available to applicant.

Strictly, to have a deposit account, it may not be necessary to have a credit report for the applicant. However, if the deposit account allows deposits by sealed envelope through ATMs, overdraft or negative balance allowances, then a credit report provides information on the suitability of overdraft provisions for the applicant. Accordingly, prudent banking practice utilizes credit reports for applications to open accounts.

A credit report for the applicant can be obtained from a third party credit bureau, such as Equifax™ or others. With other information about the applicant, the credit report may be used by the bank official to determine which products should be made available to the applicant.

The bank official approves or declines the desired product(s) and the bank opens the approved products. Appropriate pass books, checks, credit cards, debit cards and access cards are ordered for the applicant.

Some banks have attempted to improve this process. For example, US patent 5,866,889 was issued to Weiss et al. on February 2, 1999 under title Integrated Full Service Consumer Banking System and System and Method for Opening an Account. The patent describes a sales tool for use at a bank branch by a personal banker to identify recommended products for a particular customer in a face-to-face session, and to assist in the account opening process.

The above procedures necessitate that an applicant attend at an existing branch to open a product. In some cases, branches are prevalent, but not ubiquitous. Further, their hours of operation may make the branch inaccessible for many potential new product applicants.

Automated teller machines (ATMs) provide limited access to a bank product holder's accounts without the scale of overhead associated with traditional bank branches. Generally, withdrawals, deposits, bill payments and transfers can be made at ATMs. They are frequently located in convenient, non-traditional locations, such as in grocery stores and they can operate 24 hours a day, 7 days a week. However, it is not possible to open an account through an ATM.

For telephone and Internet banking, the bank will collect and identify financial and other information required to qualify an applicant for a product; however, the product privileges will not be activated (and the related account will not be accessible) until paper forms are sent to applicant and received by the institution, the required checks are performed, and the products are approved by an institution official.

Alternative systems and methods for opening deposit taking accounts are desirable.

### SUMMARY OF THE INVENTION

In a first aspect the invention provides a deposit account application processing network comprising an applicant system for receiving deposit account application information including applicant identification information and an applicant's desired deposit product from the applicant at a non-branch location. The applicant system also transforms the applicant information into computer-readable deposit account application data. The deposit account application processing network also comprises an automated application processing system for processing the computer-readable deposit account application data from the applicant system. The automated application processing system has an automated system for processing the received application data to create a computer-readable qualification request to determine whether or not applicant is qualified for the desired deposit product, an automated system for processing a computer-readable response to the qualification request, an automated system for approving the deposit product based on the response to the qualification request, and an automated system for opening a deposit account for the approved deposit product, which account is accessible by the applicant.

The applicant system may utilize a terminal at the non-branch location for entry of the application information, including verified identification information. The terminal may be operated by an attendant that verifies the identification information.

The applicant system may be contained within a kiosk. The kiosk may contain an ATM for receiving deposits for deposit accounts, and a telephone. The applicant system may contain a telephone banking interface for accessing opened deposit accounts. The kiosk may also contain an Internet terminal, while the processing system has an Internet banking Interface for accessing opened deposit accounts. The kiosk may be located within a retail outlet, such as a grocery store.

The automated system for processing a response to the qualification may obtain and evaluate credit history information about the applicant. The automated system for processing a response to the qualification request may evaluate applicant information against fraud parameters.

Alternatively, the applicant system may have a terminal provided at the non-branch location for entry of deposit account application information and an automated system is provided for verifying identification information of applicant entered by the applicant at the terminal.

The deposit account may be a bank deposit account. The processing network may contain no branch locations.

In a second aspect of the invention, the automated application processing system described above is provided. The processing system is used in association with an applicant system that receives deposit account application information from applicant at a non-branch location.

In a third aspect the invention provides a method for automatically processing a deposit account application. The method comprises receiving a customer application request for a deposit product from an applicant at a non-branch location. Receiving the customer application request includes receiving application identification information and applicant's desired deposit product. The received request is transformed into computer-readable deposit account application data. The customer application request is automatically qualified by processing the computer-readable deposit account application data. The method of automatically qualifying the customer application request includes automatically creating a computer-readable qualification request for automated processing by a qualification system to determine whether or not applicant is qualified for the desired deposit product, automatically receiving a computer-readable response to the qualification request, and automatically approving the desired deposit product based on the response to the qualification request, then automatically opening a deposit account for the approved deposit product, which deposit account is accessible by the applicant.

In a fourth aspect the invention provides the automatic qualification and later steps of the previous aspect.

In other aspects the invention provides various combinations and subsets of the aspects described above.

### BRIEF DESCRIPTION OF THE DRAWINGS

For a better understanding of the present invention and to show more clearly how it may be carried into effect, reference will now be made, by way of example, to the accompanying drawings which show the preferred embodiment of the present invention and in which:
- Fig. 1: is a schematic representation of a report of a customer information file in a database utilized in the preferred embodiment of the invention;
- Fig. 2: is schematic representation of a listing of bank products associated with the customer information file of Fig. 1;
- Fig. 3: is a pictoral representation of a kiosk associated with a depository system of the preferred embodiment of the invention;
- Fig. 4: is a schematic representation showing a kiosk of Fig. 3 connected to a depository system of the preferred embodiment of the invention;
- Fig. 5: is a block diagram of the depository system of Fig. 4;
- Fig. 6: is a block diagram of an applicant reliability scoring system utilized by the depository system of Fig. 5;
- Fig. 7: is a block diagram of a depository network of the preferred embodiment of the invention;
- Fig. 8a: is a flow diagram of events occurring during a deposit taking account opening session associated with the preferred embodiment of Fig. 5;

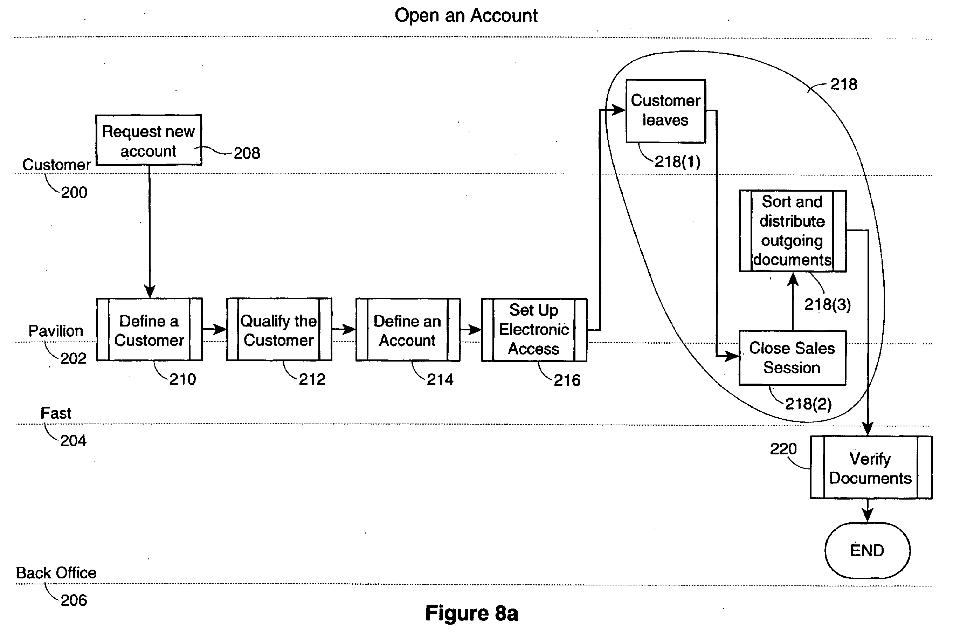

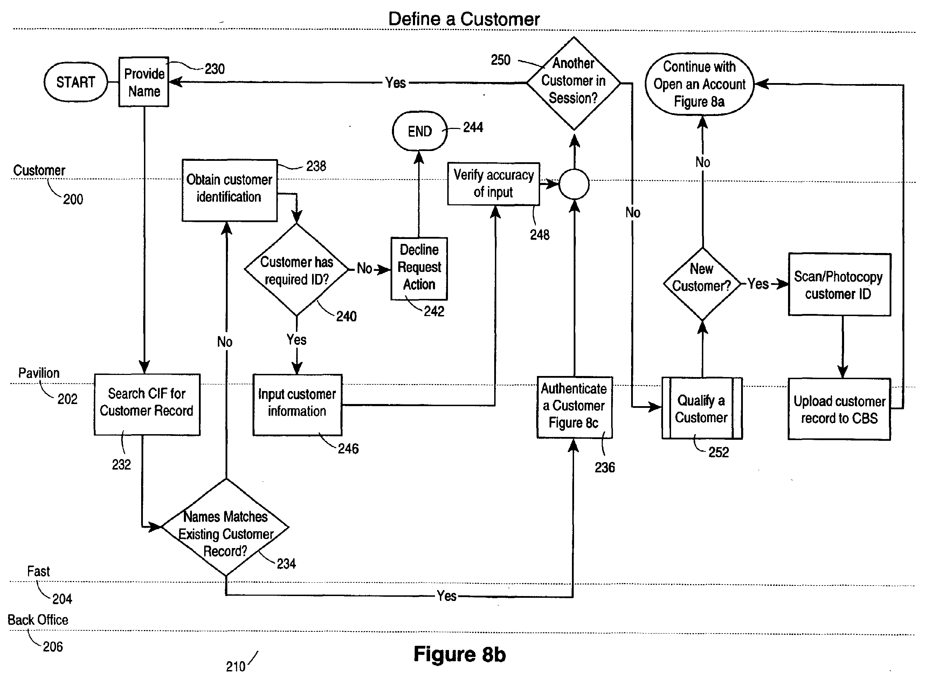

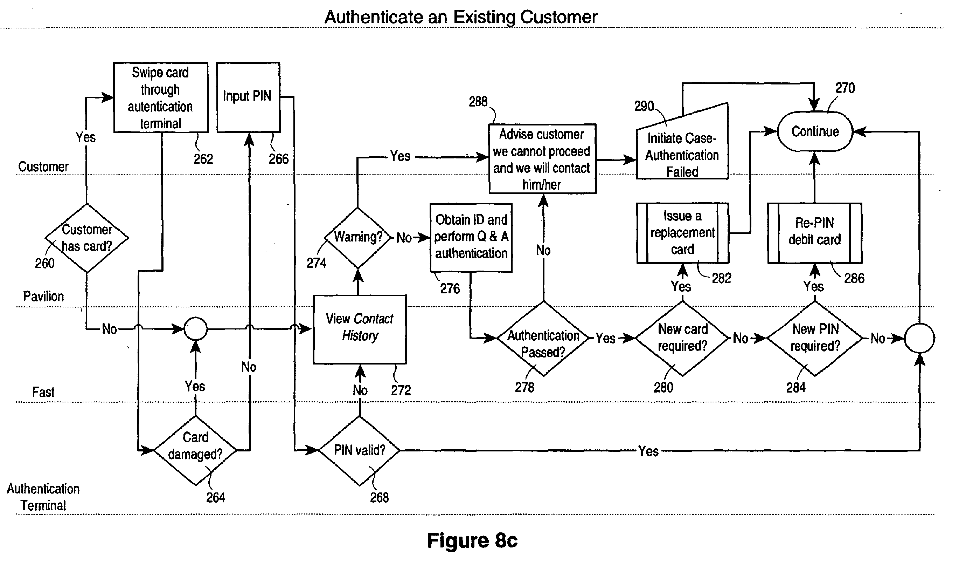

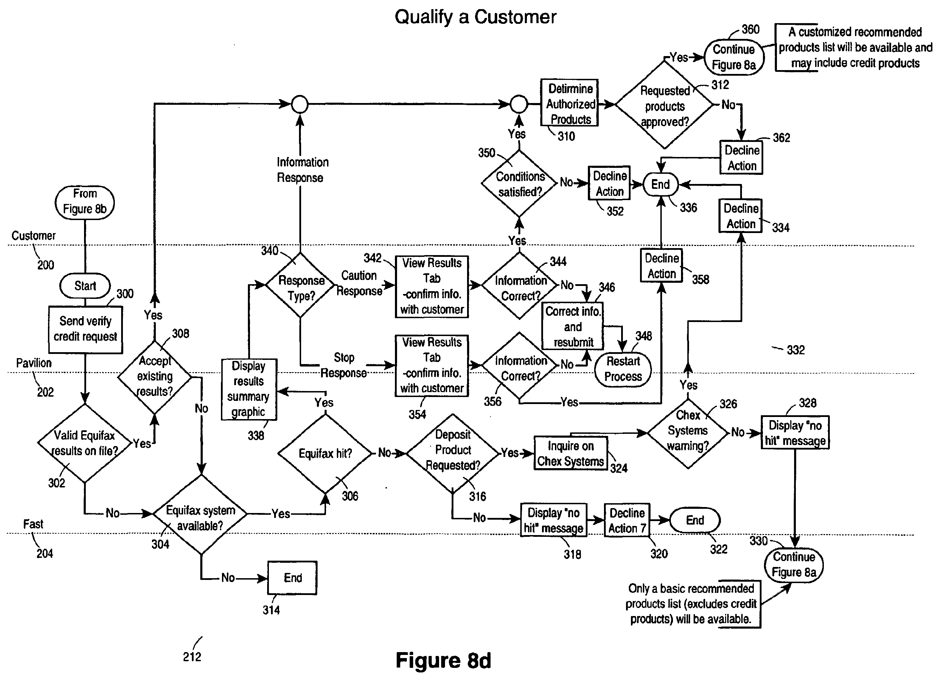

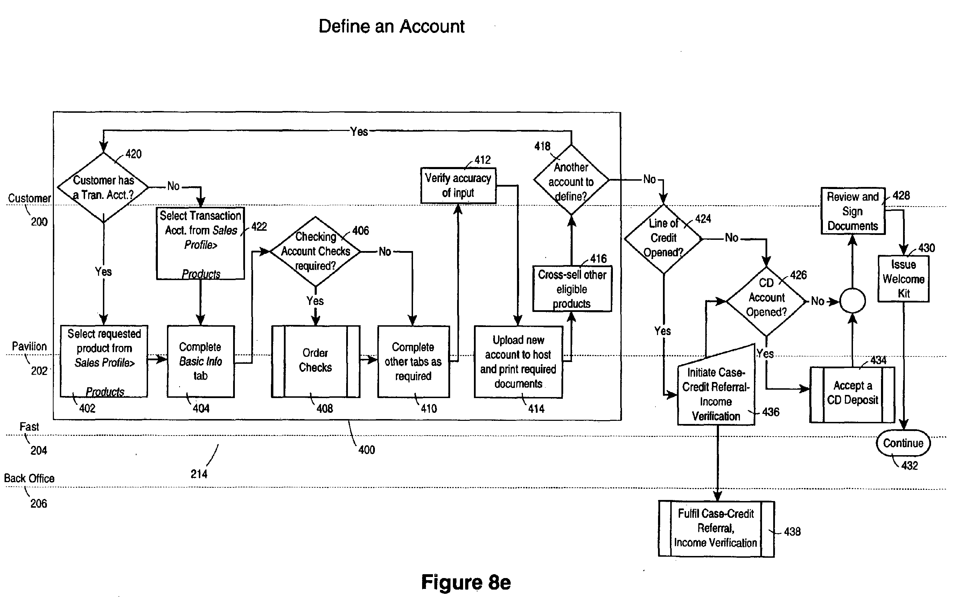

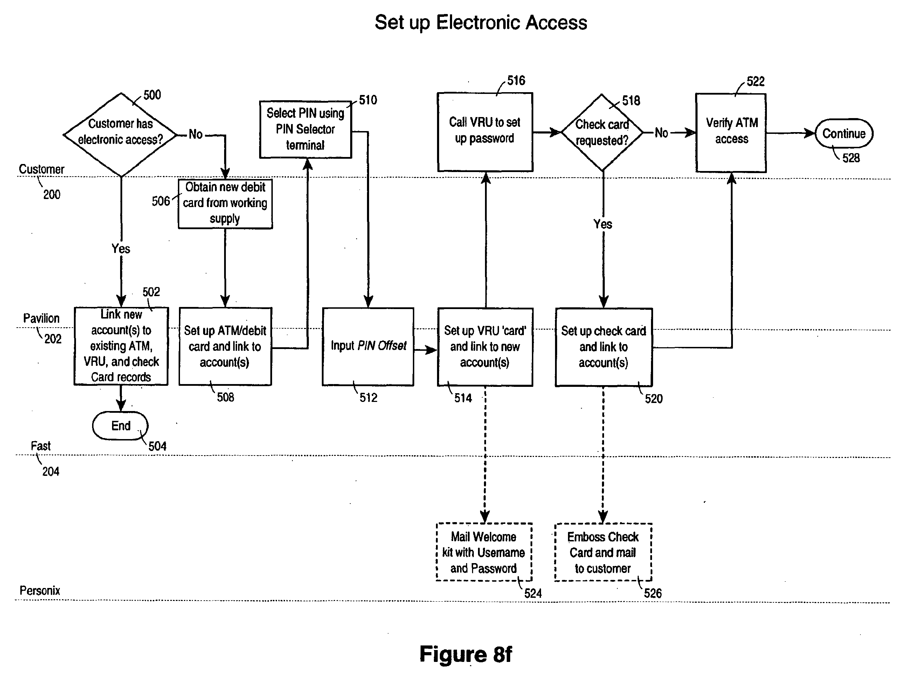

- Fig. 8: is a detailed flow diagram of a define a customer event in the flow diagram of Fig. 8a;
- Fig. 8c: is a detailed flow diagram of an authenticate an existing customer event in the flow diagram of 8b;
- Fig. 8d: is a detailed flow diagram of a qualify the customer event in the flow diagram of Fig. 8a;
- Fig. 8e: is a detailed flow diagram of a define an account event in the flow diagram of Fig. 8a;
- Fig. 8f: is a detailed flow diagram of a set up electronic access event in the flow diagram of Fig. 8a;

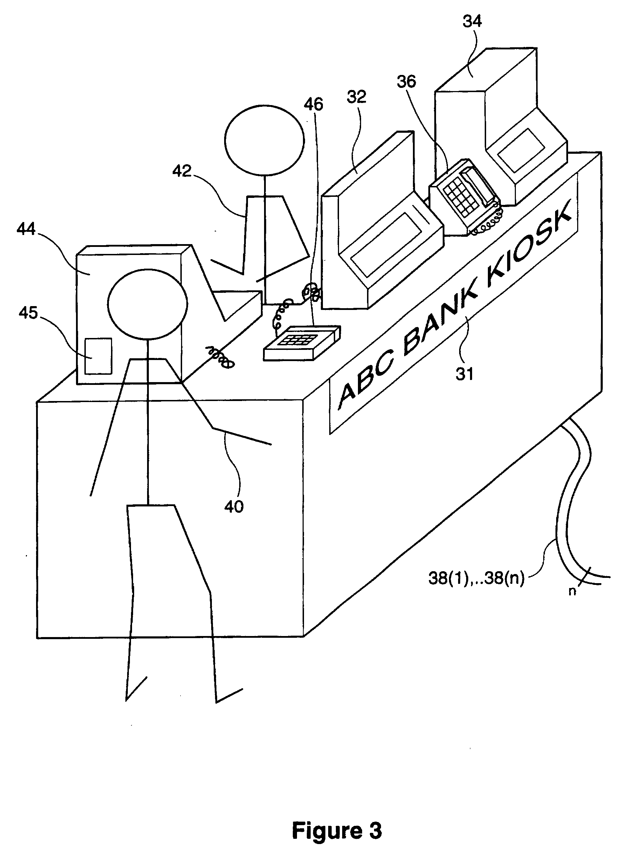

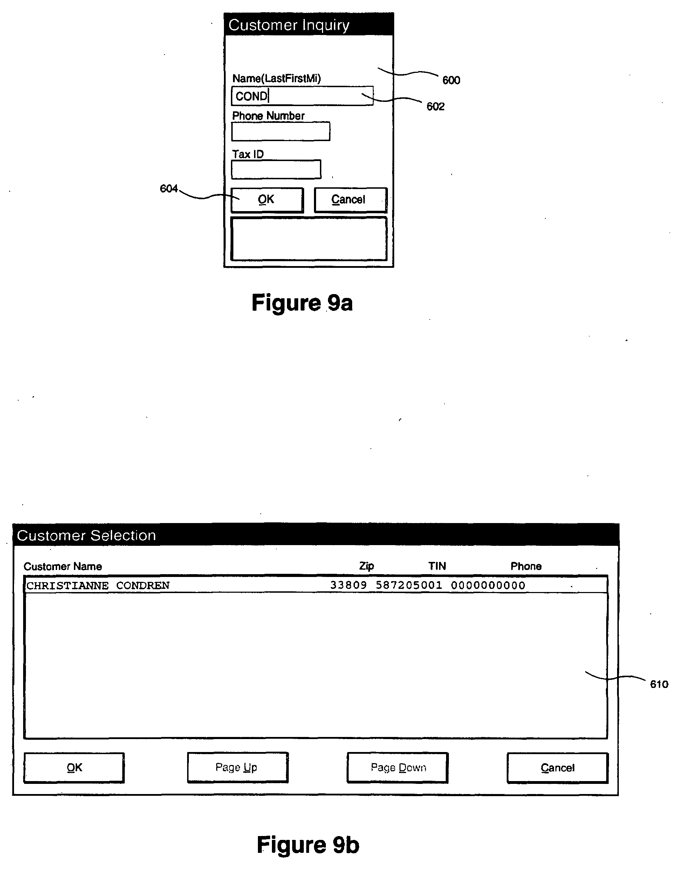

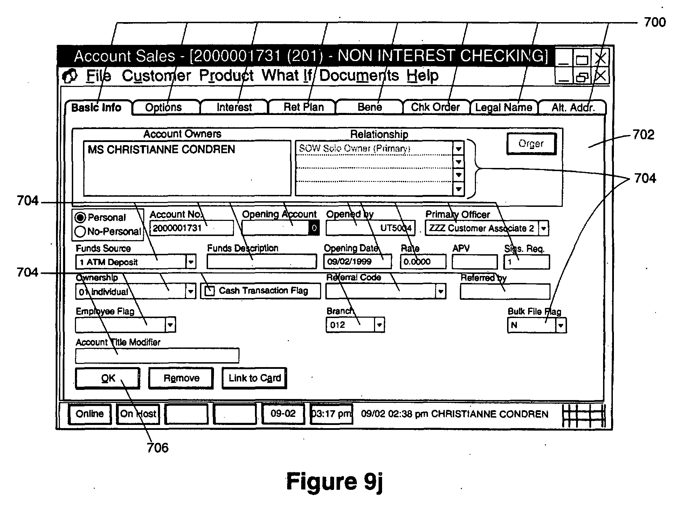

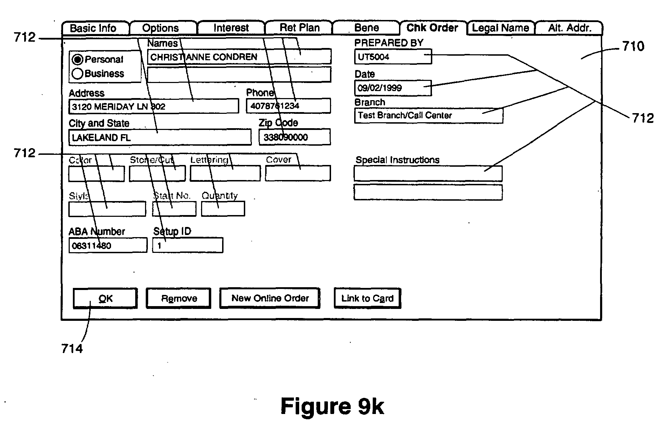

- Fig. 9a: is a representation of a display screen on a terminal used in the kiosk of Fig. 3 for a customer inquiry to search a customer information file for customer record used in Fig. 8b;
- Fig. 9b: is a display screen for a customer selection form of results from the customer inquiry of Fig. 9a;

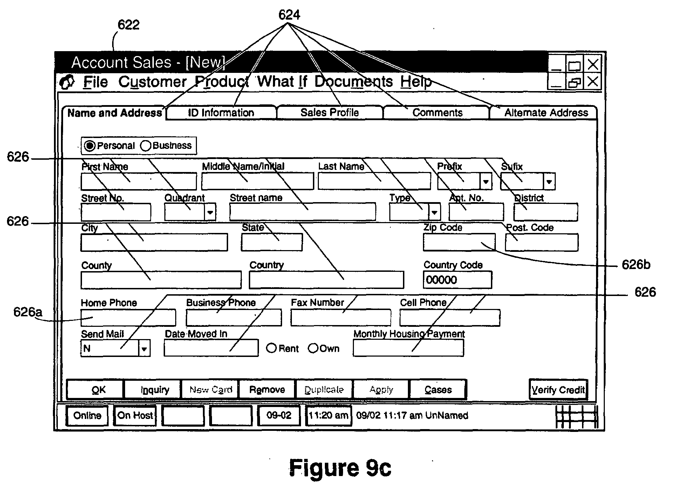

- Fig. 9c: is a display screen to input customer information used in Fig. 8b;

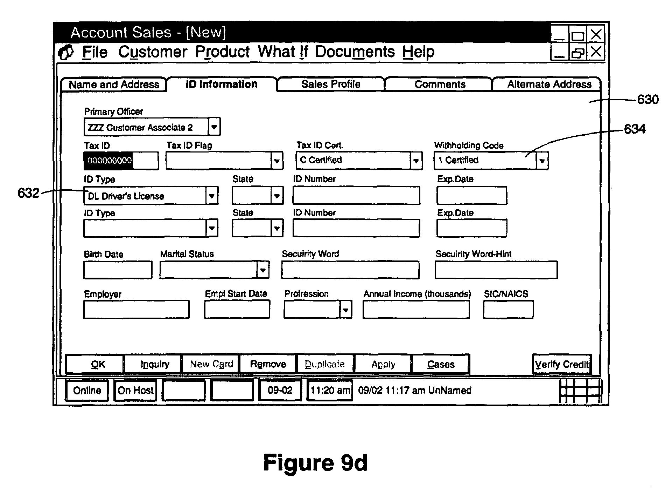

- Fig. 9d: is a display screen to input additional customer information used in Fig. 8b;

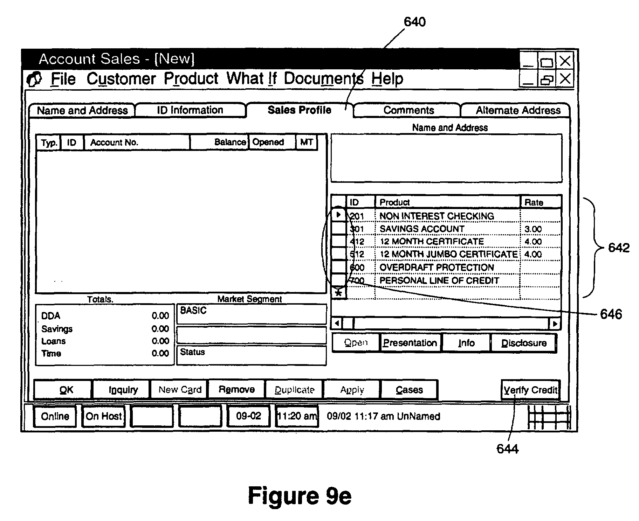

- Fig. 9e: is a display screen of all products for credit verification used in Fig. 8d;

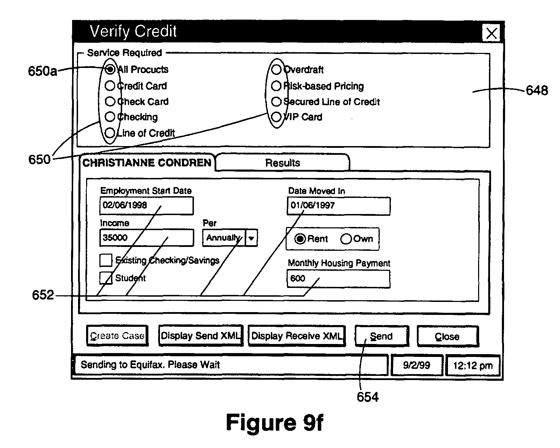

- Fig. 9f: is a display screen for a verify credit request used in Fig. 8d;

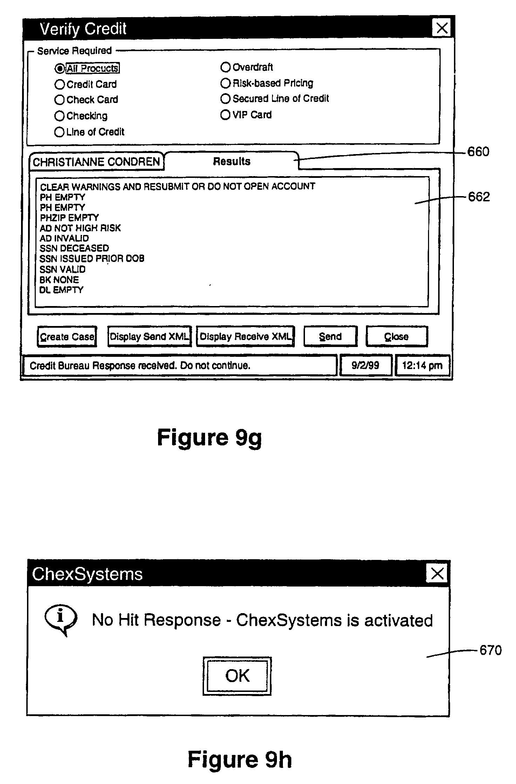

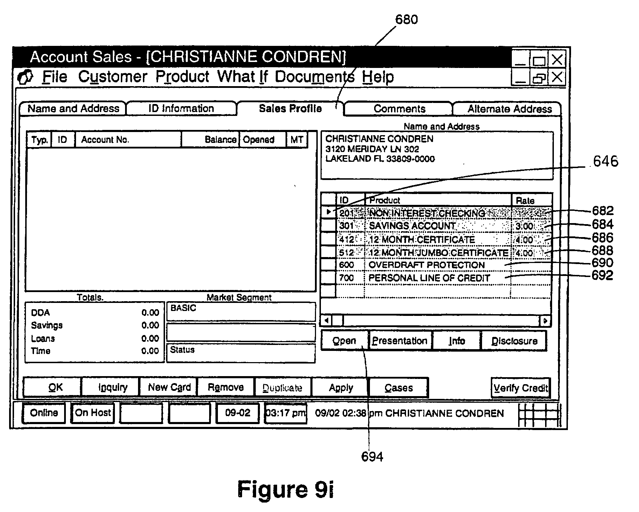

- Fig. 9g: is a results summary graphic used in Fig. 8d;
- Fig. 9h: is a display screen of a no hit message used in Fig. 8d;
- Fig. 9i: is a recommended products list used in Fig. 8d;
- Fig. 9j: is a basic info tab used in Fig. 8e;
- Fig. 9k: is a check order tab used in Fig. 8e;

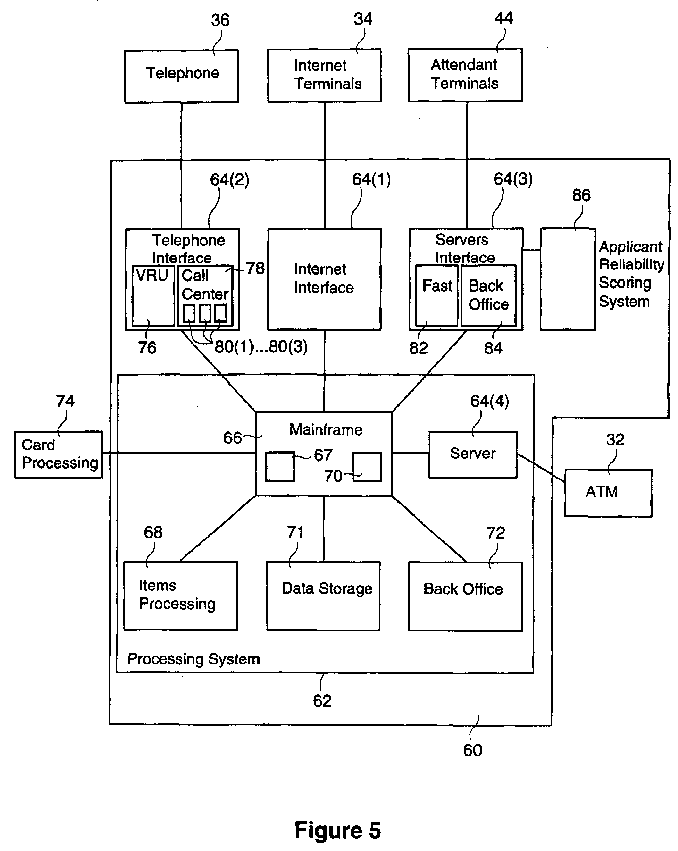

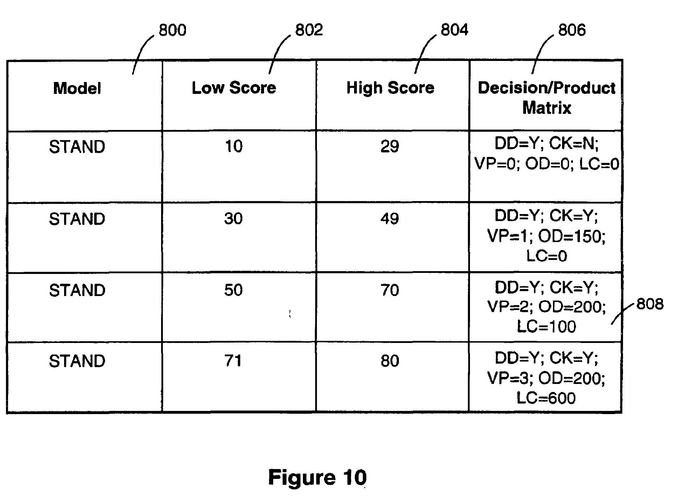

- Fig 10: is a representative extract of a decision matrix used in the depository system of Fig. 5; and

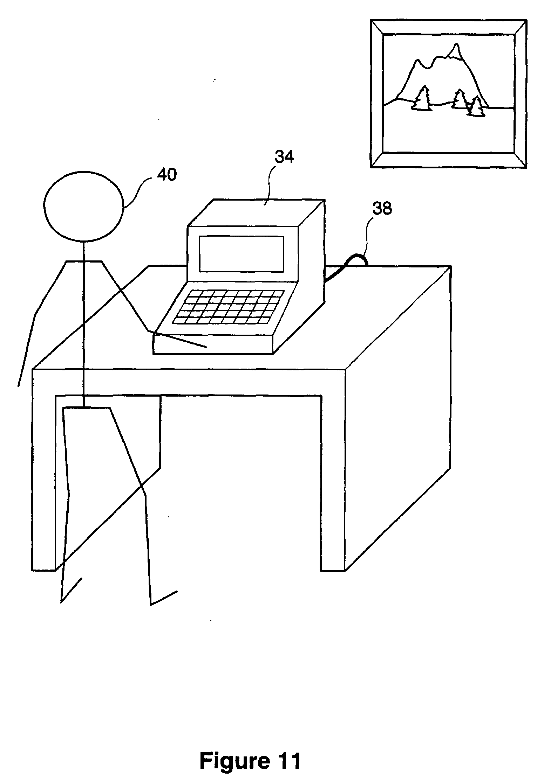

- Fig. 11: is a pictoral representation of an applicant utilizing an embodiment of the invention at home.
In the drawings, like elements have like reference numerals (and individual elements bear unique alphabetical suffixes).

### DETAILED DESCRIPTION OF THE EMBODIMENTS

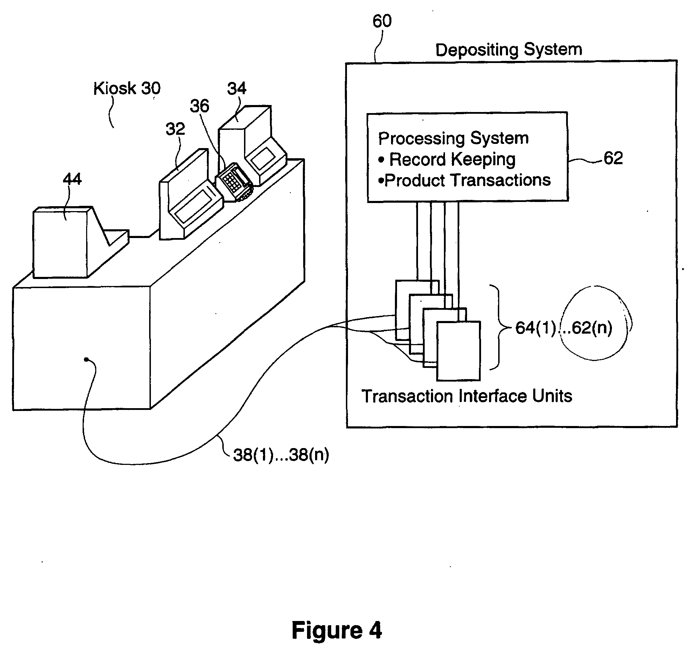

Referring to Figure 4, a depository system 60 does not require branches. As will be expanded in detail later, the depository system 60 performs all day-to-day deposit functions: credits and debits are registered against deposit accounts, interest calculations and credits are performed, and client records are maintained. To access the depository system 60, a number of interfaces 64 are provided. Some interfaces 64 have more features than others. The depository system 60 enables a client to open a deposit account in a single session without visiting a certified branch. An applicant may have a deposit account opened with access to the deposit account when visiting a kiosk (30, Figures 3 and 4) which is not a certified branch.

A deposit is a liability of the deposit taking institution that is payable to the account holder upon demand without prior notice. A deposit is not a loan. It is illegal for non-deposit taking institutions to take a deposit. Among other things, all deposit taking institutions must have FDIC insurance for deposits, or similar mandatory deposit insurance in other jurisdictions. A deposit account connects the amount of deposits, for which the institution is liable, to the holder of the account. A deposit account may have various features such as the payment of interest on deposits or the ability to receive credit in addition to making or withdrawing deposits. For example, a deposit account, may be a savings account, a chequing account, or a chequing account with overdraft protection.

It will be recognized that deposit taking institutions may provide products other than deposit products, for example, credit card products. Although the preferred embodiment may be utilized in association with such non-deposit products, they do not fall with the definition of deposit accounts, and do not result in the strict certification requirements related to the taking of deposits. Thus, such non-deposit taking accounts will not see as many of the benefits derived from the preferred embodiments as do deposit accounts.

A deposit account is open for access to an applicant when the applicant is able to make deposits to and withdrawals from the deposit account. Such deposits and withdrawals are not necessarily in cash. Deposits and withdrawals may be made in association with other products provided by a deposit taking institution. For example, a request to make a bill payment may involve a withdrawal from a deposit account.

A database (70, Figure 5) associated with the depository system 60 stores information regarding clients and products for clients of the depository system 60. The remainder of this description will be made solely with reference to a bank, bank accounts and bank deposits. It will be recognized by those skilled in the art that it applies equally to other deposit taking institutions.

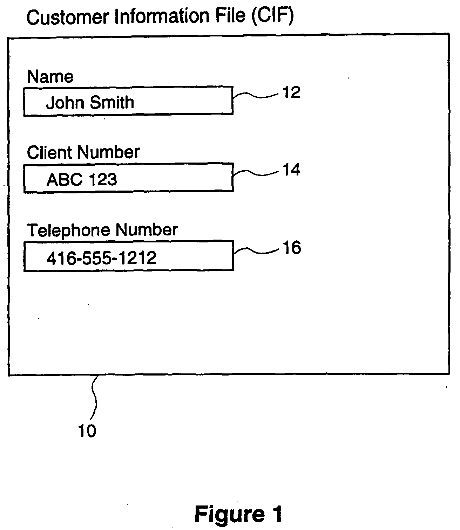

Referring to Fig. 1, a portion of a Customer Information File (CIF) 10 for a bank client is shown in report form. CIF 10 has fields containing information about the client including, for example, name 12, client number 14 and telephone number 16. CIF 10 is generated from a database (70, Figure 5) associated with the depository system 60.

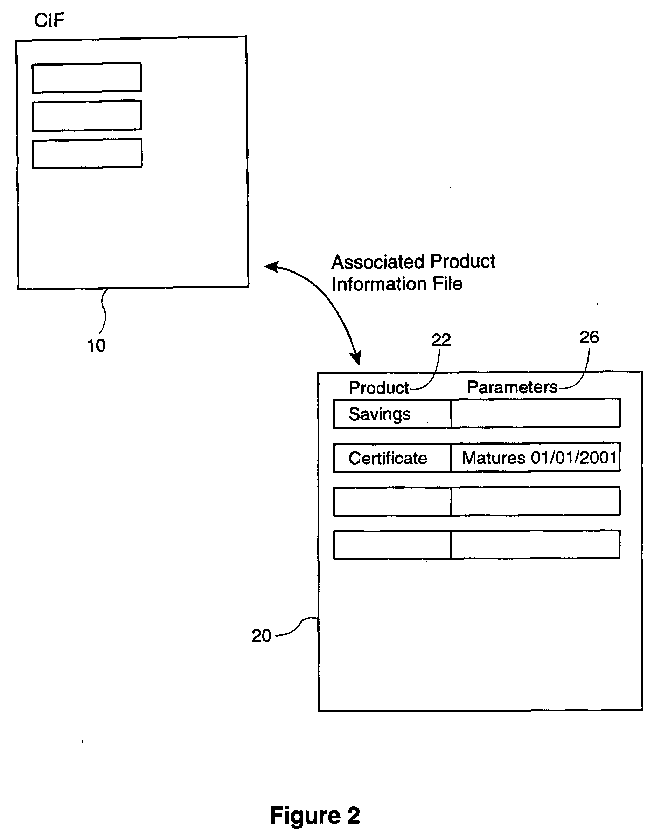

For a client, information relating bank products controlled by him may be associated with CIF 10. Referring to Fig. 2, a product information file 20 is associated with CIF 10. Product information file 20 has fields containing information about the products held by the client in accounts, including the product type 22 and product parameter 26. In this example, the client has a savings product, and a certificate of deposit having a maturity date of 01/01/2001. It can be appreciated that CIF 10 and product information file 20 may comprise different or additional fields according to requirements of a particular institution utilizing the depository system 60.

Referring to Fig. 3, a client may access the client's accounts of the depository system 60 through self-contained kiosk 30 for communicating with depository system 60. Kiosk 30 is a representation of a typical station which may be located at convenient locations, for example at or adjacent to a retail outlet. Kiosks 30 may be placed in non-traditional banking sites, such as within grocery stores or other retail locations, providing access to banking products at locations where clients and potential clients habitually visit. Accordingly, both the bank and the retailer may benefit from the convenience of having both services available at one location for "one-stop shopping". Operation and maintenance of kiosk 30 may be more flexible and less expensive than a bank branch. Kiosk 30 may provide a broad range of services for a product holder in a less-expensive, more accessible venue compared to a bank branch. It can be appreciated that the term "kiosk" refers generally to a station that provides access to deposit accounts.

Kiosk 30 may be branded to promote the institution providing the banking services, or, alternatively, it may be branded with an entirely different name, for example, a name associated with, or to be associated with, a particular retailer. Branding kiosk 30 with a name associated with a retailer provides for goodwill of the retailer to be used to benefit the deposit institution in attracting new customers. In the example, sign 31 identifies kiosk 30 as an "ABC Bank Kiosk". The deposit institution also benefits from simply being in a location that generates a great deal of recurring customer traffic.

Several terminals 32, 34, 36 at kiosk 30 provide customers with different access mechanisms to their accounts. Each access mechanism may provide different access features for accounts. ATM terminal 32 enables a client to make deposits, withdrawals, transfers and bill payments from deposit accounts in a known manner. Internet terminal 34 provides a client with access to deposit accounts through the bank's Internet web site (64(i), Figure 5). Internet terminal 34 provides features such as statement review, bill payments, transaction history review, e-mail interface, account summaries, funds transfers and reports. Typically, Internet terminal 34 comprises a personal computer having communications hardware and software to access the Internet (not shown). An example of an Internet terminal 34 is a Dell™ personal computer connected to the Internet via a 56K modem with Netscape Navigator™ installed on it to provide an interface to the Internet. It will be appreciated that other configurations for terminal 34 are available to those skilled in the art. Telephone terminal 36 enables a client to access a telephone banking call center (78, Figure 5) to process product transactions and product information requests.

Terminals 32, 34 and 36 communicate with the depository system 60 through connections 38(1), 38(2) ... 38(n). It will be appreciated that connections 38(1) ... 38(n) may be grouped together into a single connection.

It will be appreciated that stand-alone ATMs 32, Internet terminals 34 and telephones 36 located elsewhere may also be used to access the depository system 60.

Kiosk 30 also enables new clients to obtain immediate access to new accounts for products upon receiving approval from the depository system 60. In Fig. 3, new client 40 requests new products through attendant 42. Attendant 42 processes product requests through terminal 44, which is connected by one of connections 38 to the depository system 60.

In the preferred embodiment terminal 44 is a relatively dumb client terminal 44 connected through a TCP/IP connection to the depository system 60. As a relatively dumb client terminal 44, its costs and maintenance are lower than typical personal computers. Also, kiosk terminal software 44 which runs on terminal 44 originates from the depository system 60. Accordingly, network security can be co-ordinated through the depository system 60 . However, terminal 44 may be a typical personal computer on which kiosk terminal software 45 operates locally. In this embodiment, kiosk terminal software 45 communicates with the depository system 60 and the depository system 60 processes transactions. In the preferred embodiment of the invention, kiosk terminal software 45 has a display interface with a Windows ™ -compatible look and feel. Other display interface styles could be used to provide the functionality required herein. More detail on aspects of kiosk terminal software 45 is provided later. In the preferred embodiment, terminals 32, 34 and 36 at kiosk 30 do not access account opening parts of the depository system 60.

Also at kiosk 30, card reader/writer 46 provides programming of PIN numbers for new client cards.

When a new account is opened, approval of access to accounts for products is provided by the depository system 60. Accordingly kiosk attendant 42 has no need for authority to provide approval, rejection or modification of product applications. Also attendant 42 cannot commit the bank to any customer banking transactions or activities. Further, attendant 42 cannot handle funds for the bank and has no role regarding the making of customer deposits, withdrawals or loan disbursement transactions between the bank and the client. Instead, these functions are provided through terminals 32, 34, 36.

With the restricted capabilities of attendant 42 and defined capabilities of the terminals 32, 34 and 36 at kiosk 30, kiosk 30 is not considered a bank branch by the US federal banking regulatory body, the US Office of the Comptroller of Currency (OCC). Title 12 U.S.C. 36 (j) provides the following definition of a branch of a bank:

The term 'branch' as used in this section shall be held to include any branch bank, branch office, branch agency, additional office, or any branch place of business ... at which deposits are received, or checks paid, or money lent. The term 'branch' as used in this section does not include an automated teller machine or remote service unit.

Accordingly, OCC approval for each kiosk site under 12 U.S.C. 36 is not required, which streamlines cost and time issues for establishing a kiosk site. Similar definitions of branch and certification requirements apply in other jurisdictions.

It will be appreciated that with ATM 32, Internet terminal 34, telephone 36 and terminal 44, account holder 40 has access to bank accounts for products without having to visit a bank branch. It will be appreciated that access to bank products may include making deposits, withdrawls, funds transfers, account inquiries and bill payments.

Figure 4 shows connection and transaction aspects of kiosk 30 with depository system 60. At the heart of depository system 60 is processing system 62, which maintains information on clients and their products, and processes product transaction requests.

ATM terminal 32, Internet terminal 34, telephone 36 and attendant terminal 44 are connected to depository system 60 through connections 38(1) ... 38(m) respectively. Each terminal type (ATM 32, Internet 34, telephone 36 and attendant terminal 44) has different physical and logical interfacing issues associated with it. For example, requirements for receiving and processing transactions from telephone 36 differ from requirements for processing transactions from ATM terminal 32. Accordingly each terminal type communicates with processing system 62 through specific transaction interface units 64(1)...64(n). Each transaction interface unit 64 processes received transaction requests from their connected terminals 32, 34, 36 or 44 and if approved, causes processing system 62 to execute approved transactions and update its database accordingly. Each transaction interface unit 64 may have separate ancillary units associated with it providing specialized functionality required because of the products offered or the nature of the communications for the interface. It can be appreciated that other interface mechanisms with processing system 62 may be used to effect transaction requests from different terminal types.

Terminal 44 transforms information from the applicant into computer-readable data for the depository system 60.

Referring to Figure 5, at the heart of processing system 62 is mainframe 66, which ultimately processes or controls all transactions for depository system 60. Mainframe software 67 operates on mainframe 66. In the preferred embodiment, mainframe 66 comprises Comprehensive Banking System from Fiserv, Inc. As can be appreciated, mainframe software 67 is distinct from kiosk terminal software 45. Kiosk terminal software 45 allows data to be entered and processing requests to be made to mainframe 67 from terminal 34; however, mainframe 66 and mainframe software 67 perform the actual processing of account data. Processing system 62 is a distributed system, with functional components in several different cities. It can be appreciated that some or all aspects of processing system 62 may be implemented in a non-distributed system.

Mainframe 66 is connected to items processing unit 68 and data storage unit 70. Items processing unit 68 processes inclearing items from the Federal Reserve Bank and local clearinghouses, exception item processing (NSFs, large dollar transactions), statement rendering (storage of checks) and document courier services. In the preferred embodiment of the invention, items processing unit 68 is Fiserv™ Items processing.

Data storage unit 70 provides data retention for client information for mainframe 66 in the preferred embodiment of the invention. Operational data required to process transactions is stored in data storage unit 70.

Data warehouse 71 provides retention of non-operational data for mainframe 66. Data warehouse 71 is an ancillary storage system for mainframe 66.

Back office unit 72 provides verification of product processing items, product system balancing, product tracking, archiving data, product adjustments, processing of abandoned products and various regulatory related functions.

Other ancillary units may interface with processing system 62 including card/statement processing unit 74. It can be appreciated that each ancillary unit can provide an additional financial product or feature of a product to depository system 60. Although the inclusion of each ancilliary unit enhances the product range of depository system 60, the ancillary units may not be required to provide basic banking services to clients. In the preferred embodiment of the invention, card/statement processing unit 74 is operated by Personix™.

Other systems, not shown, may interface with processing system 62 to provide other financial or data processing services. Other systems may include a Visa™ processing unit and mortgage processing unit. An example of a mortgage processing unit is Iown.com. It can be appreciated by those skilled in the art that elements of processing system 62 may be integrated into larger functional elements or even a single system providing the same functionality as a distributed network, while falling within the functional attributes of processing system 62.

For various terminals 32, 34, 36, 44 connected to depository system 60, in the preferred embodiment of the invention, communications between the terminals 32, 34, 36, 44 and processing system 62 are effected through the separate transaction interface units 64. Internet terminals 34 are connected to transaction interface unit 64(1); telephones 36 are connected to transaction interface unit 64(2); attendant terminals 44 are connected to transaction interface unit 64(3); ATMs 32 are connected to transaction interface unit 64(4). In the preferred embodiment of the invention, transaction interface unit 64(4) is a Fiserv™ server.

In the preferred embodiment of the invention, transaction interface unit 64(1) for Internet terminals 34 provides the interface. Transaction interface 64(1) enables clients to make the following transaction requests: transfers and product inquiries; establishment of bill payment cycles; customized product account reports; and transaction record downloads to terminal 34.

In the preferred embodiment of the invention, transaction interface unit 64(2) for telephones 36 comprises two sub-systems. The first sub-system is voice response unit (VRU) 76 providing automated processing for transaction requests without utilizing a human agent. VRU 76 provides clients access from any telephone to their products, 24 hours a day, 7 days a week. In the preferred embodiment of the invention, VRU 76 provides product sign on authorization, bill payment, payment authorization and debiting, account transfers and other services. All requests are made by the account holders via entries made on a keypad of telephone 36 used by the account holder when accessing VRU 76. In another embodiment of VRU 76, a voice recognition unit may process account holder requests.

At any time, clients using VRU 76 have access to call center 78. Call center 78 is the second sub-system of telephone transaction interface unit 64(2). Using call center 78, product holders can provide oral requests to agents at call center 78 who process transactions. In the preferred embodiment of the invention, call center 78 comprises a Sprint/Rockwell™ system. The Rockwell system includes a telephone switch providing telephone call management amongst the callers and the telephone agents of the bank. An Intervoice Invisions™ system processes call transactions. Call center 78 has terminals 80(1) providing Internet password maintenance, terminals 80(2) for processing product transactions and inquiries, and terminals 80(3) providing debit/check card maintenance services. As shown in Figure 5, VRU 76 is located near call center 78; however, it can be appreciated that VRU 76 may be situated elsewhere, provided it is suitably connected to process telephone transactions.

In the preferred embodiment of the invention, transaction interface unit 64(3) for terminals 44 comprises servers 82. In the preferred embodiment of the invention, the servers provided by Fiserv, Inc. In the preferred embodiment, servers 82, shown collectively, provide specialized software packages utilized by different personnel within depository system 60. Servers 82 comprise submodules to perform specific tasks. The sub-modules include: FAST Teller™, which is used by personnel in local back office 84 for processing banking transactions, FAST Administration™, which process applications for opening of banking accounts, and CSCS (Customer Service Call Center Solutions) System, which assists clients with transactions that cannot be "self-served" by the clients alone.

When applicant 40, makes a request for new products at a kiosk 30, the application is processed and assessed at transaction interface unit 64(3). An aspect in the application process is obtaining a reliability assessment of applicant 40, based on the information provided to depository system 60. In the preferred embodiment of the invention, applicant reliability scoring system 86 is used. In the preferred embodiment of the invention, Equifax™, which is a third party credit reporting bureau, provides information and performs the decisioning functions of the applicant reliability scoring system 86. Further details on the scoring system 86 are provided later. It can be appreciated that in lieu of, or in addition to, a separate applicant reliability scoring system 86, transaction interface system 64(3) may utilize an internal scoring system which does not require a report from a third party. The internal scoring system, not shown, may rely on internal data from the processing system 62 or may be any suitable heurestic method which incorporates a credit assessment of applicant 40. In the preferred embodiment, the applicant reliability scoring system 86 provides all decisions regarding the approval of requested products.

Local back office 84 provides administrative support for transaction interface unit 64(3), including file handling, system maintenance and special client requests. At local back office 84, credit specialists and transaction officers access servers 82 to process special requests, including appeals and special transaction requests.

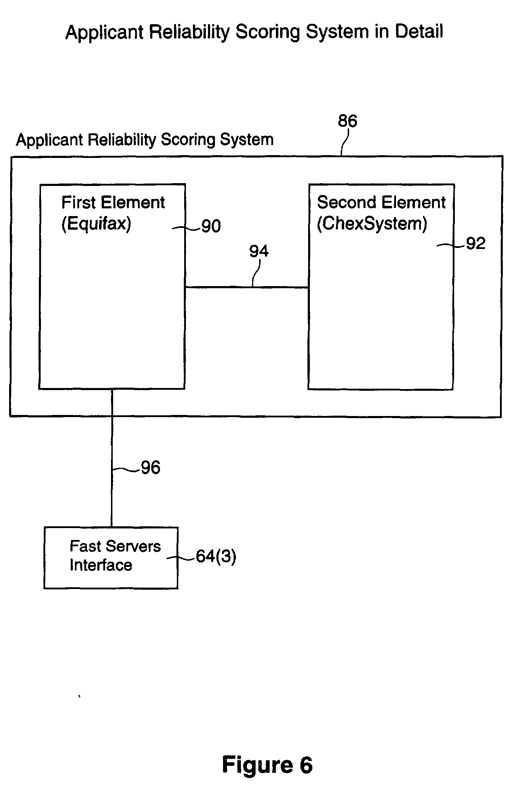

Figure 6 shows further details of applicant reliability scoring system 86. Applicant reliability scoring system 86 used in association with the preferred embodiment comprises two elements, first element 90 and second element 92. Applicant reliability scoring system 86 provides a report to transaction interface unit 64(3) providing information about applicant 40. If a report regarding a new applicant is not available from first element 90, first element 90 requests a report from second element 92. Connection 94 allows transfer of data between first element 90 and second element 92. In the preferred embodiment, first element 90 is provided by Equifax™; a second element 92, Chex System™ is provided by Delux™. It can be appreciated that another embodiment can operate with only one assessment system or more. Approvals from applicant reliability scoring system 86 are communicated to transaction interface unit 64(3) via communications link 96. It will be appreciated that any reliability report may be used by transaction interface unit 64(3) to identify from all product types those products which applicant 40 is allowed to open. In the preferred embodiment of the invention, the reliability report includes a credit rating and a fraud rating report. Other report types may be utilized for processing other commerce applications which are within the scope of the invention.

In the preferred embodiment of the invention a fraud report for applicant 40 is obtained after an appropriate credit report is obtained from the first element 90. The fraud report is processed by transaction interface unit 64(3). The fraud report identifies anomalies with the application or applicant 40 relating to the reliability of the information or applicant 40. In the preferred embodiment of the invention, the fraud report comprises a Fraudscan ™ report and a Safescan™ report, which are provided by Equifax in conjunction with the credit report relating to applicant 40.

The fraud report contains a series of data fields, each identifying an item which may identify potential concern. For example, the fraud report may track aspects of an applicant's phone number, address, social security number, date of birth, bankruptcy status and driver's license. For example, if the fraud report finds that applicant 40 has an invalid or disconnected phone number the fraud report may identify this finding as a potential concern. Each field may be assigned a score, indicating a risk scale for the field. Generally, one of three risk levels may be assigned to a field. A first level indicates that no fraud issues for that field. A second level indicates non-critical warnings for that field. Attendant 42 will be advised by depository system 60 of a non-critical warning on that field. If the non-critical warnings were caused by mis-entry of information to terminal 44, the mis-entry may be corrected. Also, these non-critical warnings may be ignored by attendant 42. A third level indicates more serious issues for that field.

Attendant 42 will be asked to either clarify the data relating to the field or the session will be terminated and no products will be provided to applicant 40.

If credit and fraud reports for applicant 40 meet a minimum threshold, depository system 60 utilizes results from the credit and fraud reports to identify a matrix of products approved for opening by applicant 40. The matrix may identify a selection of products from the family of products offered by the bank for which applicant 40 has been approved by depository system 60 to open. Additional products such as lines of credit and overdraft protection, with specific amounts for each product, may also be approved by depository system 60 to be available to applicant 40. In the preferred embodiment the matrix is used at the applicant reliability scoring system 86.

Attendant 42 identifies all approved products to applicant 40 and any approved products that applicant 40 requests may be provided to applicant 40 through depository system 60.

For any products for which applicant 40 was declined, appropriate decline letters are generated by depository system 60 and provided to applicant 40. This is a legal requirement. Accordingly, transaction interface unit 64(3) provides a streamlined system which also automatically provides necessary legal notices to applicant 40.

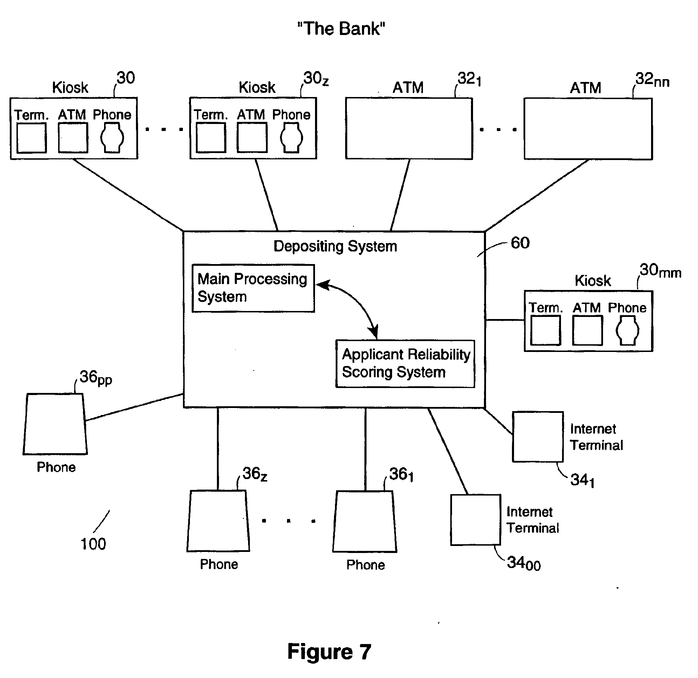

Figure 7 shows depository network 100 according to the preferred embodiment of the invention. Depository network 100 provides product holders with traditional banking services without traditional bank branches and may provide automated product information processing, customer information file processing, transaction deposits, universal loans, collateral processing, financial transaction management, item processing, general ledger processing, product reconciliation and report generation.

Depository network 100 comprises depository system 60, as described earlier, with connections to various terminals, including kiosks 30(1) ... 30(mm), ATMs 32(1)... 32(nn), Internet terminals 34(1) ... 34(oo) and telephones 36(1) ... 36(pp). Each kiosk 30 or terminal 32, 34, 36 may be located at a different site, connected independently to an appropriate transaction interface unit 64(n). It can be seen that depository network 100 does not need to include any traditional "brick and mortar" bank branch. Accordingly, depository network 100 does not need to incur any associated costs and issues with establishing and maintaining bank branches. These costs and issues include regulatory requirements, staffing requirements, higher rent and building maintenance and equipment maintenance. However, it can be appreciated that a traditional "bricks and mortar" branch may be incorporated into depository network 100, if desired.

More aspects of the flow of actions in the preferred embodiment of the invention are provided in the context of the following example and figures 8a-8f.

Figure 8a provides an illustration of the preferred flow of actions for an attendant when a new applicant requests opening an account at kiosk 30 through depository network 100.

In the preferred embodiment of the invention, there are 4 entities involved in opening a product, namely, customer 200, pavilion 202 (kiosk attendant terminal 44), FAST station 204 (transaction interface unit 64(3)) and back office 208 (local back office 84). Events in the process flow are shown as closed geometric shapes linked by arrows indicating flow direction. Placement of an event in one of customer 200 row, pavilion 202 row, FAST station 204 row or back office 206 row indicates that the respective entity is associated with the event. The events that transpire include:
0. Request new product (208)
1. Define Customer Information (210)
2. Qualify the Customer (212)
3. Define the Product (214)
4. Establish Electronic Access for a product (216)
5. Assemble Product Documents (218)
6. Verify Documents (220)

### Request New Product (208)

The first event involves applicant 40 approaching attendant 42 at the kiosk 30 and inquiring about opening an account for a product. Attendant 42 utilizes kiosk terminal software 45 operating on terminal 44 to process the request. For this example, applicant 40's name is Christine Condren, who lives in Lakeland, Florida. She wishes to open a non-interest bearing checking product. Of course, attendant 42 also may solicit applicants 40 to open new accounts.

### Define Customer Information (210)

Figure 8b illustrates the flow process associated with the preferred embodiment of the invention for defining a customer to using depository system 60. The process begins at 230 where applicant 40 provides her name to attendant 42.

All existing customers for the bank have a Customer Information File (CIF) 10 (from figures 1 and 2) associated with depository system 60. Beginning at event 232 through event 234, attendant 42 makes inquiries to the transaction interface unit 64(3) for an existing CIF 10 for applicant 40. If a CIF 10 already exists, then the application is redundant, unless a new type of product is requested. See event 236.

Figure 8c illustrates the flow process associated with the preferred embodiment of the invention when an existing customer requests a new product. First, depository system 60 must first authenticate the existing client. Beginning at event 260, attendant 42 determines whether applicant 40 has an electronic banking card. If applicant 40 has a card, it is swiped through card reader 46 and, if the card is not damaged, applicant 40 enters his PIN to depository system 60 (typically through card reader 46). See events 260, 262, 264 and 266.

If the PIN is valid, applicant 40 has been authenticated by depository system 60 and the application process continues to qualify the customer, described later. See events 268 and 270.

If applicant 40 does not have a card or has a damaged card or enters an invalid PIN for his card, then server 82 is accessed by attendant 42 to view the contact history data relating to applicant 40. See event 272. If the history data does not indicate a warning situation, then attendant 42 performs a manual authentication of applicant 40. This includes obtaining sufficient proof of identification from applicant 40 (such as a driver's license) and taking and authenticating biographical information from applicant 40. If the authentification is passed at event 278, a new card and new PIN are provided (if either are required) (shown at events 280, 282 and events 284, 286) and the procedure continues to qualify the customer at event 270. If the contact history indicates a warning or if applicant 40 does not pass the manual authentication procedure, then no bank products may be provided to applicant 40. Attendant 42 advises applicant 40 of the application rejection and back office processing of an authentication failure case for applicant 40 may be initiated upon the request of applicant 40. See events 288 and 290.

Returning to Figure 8b, at event 234, if there is no existing CIF 10 for applicant 40, then applicant 40 is a new client to depository system 60. Accordingly, a new CIF 10 must be created and processed by depository system 60. Attendant 42 obtains customer information from applicant 40, shown at event 238. If applicant 40 does not have sufficient personal identification (such as a driver's license), the application is denied and the application process is terminated. See events 240, 242 and 244.

If appropriate identification is provided by applicant 40, the information is provided to depository system 60 shown at event 246 and the accuracy of the input is verified with applicant 40, shown at event 248. The checking of identification and the accuracy of input information provides one form of verified applicant identification information. It will be evident to those skilled in the art that other forms of verification may be undertaken. At least one of these will be discussed later. If applicant 40 is applying for a joint account with another applicant 40(2), then information about applicant 40(2) is taken. See event 250, continuing to event 230. More details on processing joint account applications are provided later.

After preliminary applicant information has been provided to depository system 60, the application process continues, by qualifying the applicant, shown at event 252.

Figures 9a-9c illustrate selected computer screen shots shown on terminal 44 by kiosk terminal software 45 during the above process, in particular when a new applicant wishes to open a new account. Figure 9a shows a computer display image shown when attendant 42 searches transaction interface unit 64(3) for an existing CIF 10 of an applicant. (Unless otherwise stated, all computer display images are generated by kiosk terminal software 45 and are shown on terminal 44.) Dialog box 600 appears and attendant 42 enters applicant 40's last name in name field 602 and activates Okay button 604 using an appropriate input device, such as a mouse (not shown) or keyboard.

Figure 9b shows the Customer Selection response box containing the search results for the query. If there is no record for applicant 40 in transaction interface unit 64(3), applicant 40's name will not appear in results field 610 of the Customer Selection Box.

As there is no existing CIF 10 for applicant 40, her CIF 10 must be created using kiosk terminal software 45. Figure 9c shows a screen shot of the Name and Address Screen 620 for Product Sales screen 622 which is used to initiate a CIF 10. Product Sales screen 622 has various tabs 624 that attendant 42 can access by clicking with a mouse pointer on the tab itself. Each tab 624 is associated with a different screen, providing different functions for product processing.

Referring to Figure 9c, for Name and Address Screen 620 fields 626 are filled by attendant 42 with various information obtained from applicant 40, including full name, address and telephone number. Other information, which is required by banking regulations, may also be entered into terminal 44 at this time.

Next, appropriate identification must be provided to attendant 42 by applicant 40 and entered into terminal 44, as shown at event 234. Figure 9d shows a screen shot of kiosk terminal software 45 at this point in the procedure. Using terminal 44, the appropriate data is entered into depository system 60. Identification information screen 630 is shown, which is the screen used by attendant 42 to enter identification information about applicant 40 into transaction interface unit 64(3). Attendant 42 verifies the identity of applicant 40 by inspecting appropriate identification from applicant 40. For example, if applicant 40 provides his driver's license, the information is entered in field 662. Notably, the entry in withholding field 634 is used to indicate whether applicant 40 is certified or a non-resident alien. This designation influences what products and credit limits are made available to applicant 40.

### Qualify the Customer (212)

Next, transaction interface unit 64(3) must qualify applicant 40 to determine her eligibility for deposit and credit products.

Figure 8d shows a flow diagram of the process for qualifying a customer for the preferred embodiment of the invention. The process starts at "Send verify credit request" event 300. Equifax is the initial credit report requested. If there is no information about applicant 40 in Equifax then a credit check must be made for applicant 40. If the Equifax system is available, depository system 60 requests a report from it. See events 302, 304 and 306. If there are Equifax results currently on file for applicant 40, but the results cannot be utilized (for example, the results are too old), then a new Equifax report must be obtained as before. See events 302, 308, 304 and 306.

If the existing Equifax results can be used, then depository system 60 utilizes the existing Equifax results and determines a matrix of products which applicant 40 is authorized to open. Parameters for the authorized accounts and ancillary products, such as lines of credit, may also be authorized to be opened based on the Equifax results. The process continues with applicant 40 reviewing the selection of authorized products and accepts any authorized products. See events 310 and 312.

If a new Equifax report must be obtained and Equifax is not available, then the application process ends; see events 304 and 314.

If Equifax is available and it has no information on applicant 40 (referred as a "hit"), a credit check from a second system is requested. In the preferred embodiment of the invention, the second system is Chex System™. Further, if applicant 40 requests non-deposit products (such as credit products) then, a "no hit" message is displayed on terminal 44 by kiosk terminal software 45 and the application is declined and the application process is terminated. See events 316, 318, 320 and 322.

If only deposit products are requested, then a Chex System™ report is requested by depository system 60; see events 316 and 624. The results of the second credit check are processed beginning at event 326.

If the second credit check indicates no warning issues, then a "no hit" message is displayed on terminal 44 and the application process continues, with depository system 60 providing approval to open non-credit products. See events 326, 328 and 330.

If the second credit check indicates a warning issues, then a warning message is displayed on terminal 44, the application is rejected and the procedure is terminated. See events 326, 362, 334 and 336.

If results from Equifax are available, they are processed by depository system 60. Results of the report are available at terminal 44 at event 338. Next, a fraud report, described earlier, is obtained. In the preferred embodiment of the invention, the application process may follow one of three paths using the results of the fraud report.

For the first path, if the fraud report indicates no issues ("Information Response"), then applicant 40 may be authorized to open a selection of accounts, following events 340 to 310.

For the second path, if the fraud report indicates that there are caution issues with applicant 40's information, then the application information is confirmed by attendant 42 with applicant 40. If amendments are necessary, they are made and another credit check is initiated. See events 340, 342, 344, 346 and 348. If the information is correct, then an assessment is made regarding the application at event 350. If sufficient conditions are satisfied, then the application procedure continues to event 310.

When the first and second paths proceed to event 310, depository system 60 utilizes the existing Equifax results and determines a matrix of products which applicant 40 is approved to open (as described earlier). Parameters for the authorized accounts and ancillary products, such as lines of credit, may also be approved to be opened based on the Equifax results. The process continues with applicant 40 reviewing the selection of approved products and accepts any approved products. See events 310 and 312.

At event 350, if sufficient conditions are not satisfied, then the application is declined and the application process is terminated, following events 350, 352 and 336.

For the third path, if the fraud check indicates that there are serious issues (Stop Issues) with the fraud report, then, the application information is verified by attendant 42 with applicant 40. If amendments are necessary, they are made and another fraud check is initiated. See events 354, 356, 346 and 348. If the information is correct, then the application is declined, following events 356, 358 and 336.

At event 312, depository system 60 has already performed an evaluation of the credit report of applicant 40 to identify deposit accounts and credit accounts available to applicant 40. If no deposit account is approved, then the application is declined and the approval process is terminated, as per events 312, 362 and 336. If any products are approved, then the application follows events 312 and 360 to open any accounts.

In providing approval for opening an account, depository system 60 utilizes credit report and other information provided by applicant 40 to customize aspects of accounts approved for opening by applicant 40. For example, depository system 60 may provide a specific overdraft level and line of credit for products authorized to be opened by applicant 40. It can be appreciated that depository system 60 provides all analysis and evaluation of accounts which may be opened by applicant 40 without any human required to assess an application.

For the invention, the terms "opening" and "open accounts" refer to opening an account which has already been approved by depository system 60 to allow opening by applicant 40.

An appeal process is available to applicant 40 to further assess applicant 40's acceptability for products. Attendant 42 only initiates the appeal process if requested by applicant 40. For this example, applicant 40 request an appeal to attendant 42 at kiosk 30. Attendant 42 initiates an appeal application to kiosk terminal software 45 through terminal 44. Processing of the appeal application occurs at local back office 84. Any further documents required for the appeal may be provided by applicant 40 to attendant 42, who in turn, provides the documents to local back office 84. An appeal agent at local back office 84 reviews the appeal application with credit history results, biological information about applicant 40 and other information. If the appeal agent requires further information from applicant 40, appeal agent may make appropriate inquiries to applicant 40. The appeal agent makes a decision on the appeal application, updates appropriate records in depository system 60 to reflect the decision and informs applicant 40 accordingly. If the appeal is allowed, then applicant 40 may re-attend at kiosk 30 continue with the processing of his account applications. Accordingly, the preferred embodiment of the invention provides a systematic process for generating the required legal documents for the initial refusal without substantial decisions being made from human input.

Figures 9e-9g show selected screen shots shown on terminal 44 during the qualification process. Referring to Fig. 9e, when attendant 42 is ready to qualify applicant 40, attendant 42 initiates a credit and fraud report request to transaction interface unit 64 for applicant 40 by activiating Verify Credit button 644. Depository system 60 responds with Verify Credit screen 648 shown in Figure 9f. At this time, applicant 40 may inform attendant 42 of the product types she wishes to open. Generally, attendant 42 will initiate a request to transaction interface unit 64 to process applications of all product types for applicant 40. This is done by selecting button 650(a). However, requests relating to specific products may also be requested by selecting other appropriate buttons 650.

Attendant 42 obtains employment and income information and enters it into appropriate fields 652b in Figure 9f. After all relevant fields have been completed, attendant 42 initiates a credit and fraud request by activating Send button 654.

For the example of Christine Condren, Figure 9g is a screen shot of Results screen 660, which appears when assessment system 76 provides a credit and fraud report to transaction interface unit 64(3). Field 662 contains messages relating to the credit report. In this example, the credit report generated the following messages:

"CLEAR WARNINGS AND RESUBMIT OR DO NOT OPEN PRODUCT": The credit report has located serious issues about the creditworthiness of applicant 40 or potential fraud issues associated with applicant 40. The transaction interface unit 64(3) will not allow a product to be opened for this applicant 40 with the information provided for applicant 40. Attendant 42 can verify the information provided by applicant 40 to see if there are some clerical or administrative errors associated with the information provided.

The remaining entries relate to issues with specific items relating to the credit report. "PH EMPTY": The credit report has an empty field for applicant 40's phone number, indicating that attendant 42 did not enter any phone number in field 626(a) in Figure 9c. A telephone number is mandatory in the preferred embodiment as it is used by the credit rating system to correlate aspects of the phone number with applicant 40. For example the following correlations may be made: (i) is the phone number still in service? (ii) is the phone number a residential or business number? Or (iii) does the phone number belong to applicant 40? Alternatively designs will be evident to those skilled in the art.

"PHZIP EMPTY": The zip code for applicant 40's address is empty, indicating that attendant 42 did not fill an entry in either field 626b in Figure 9c.

"AD NOT HIGH RISK": The address provided by applicant 40 is not high risk. A high risk address may include a prison.

"AD INVALID": The address provided is not valid.

"SSN DECEASED": The social security number provided is for a deceased person.

"SSN ISSUED PRIOR TO DOB": The social security number provided was issued prior to the date of birth information provided by applicant 40.

"SSN VALID": Aside from the above flags, the Social Security Number itself is a valid number.

"BK NONE": Applicant 40 has not declared bankruptcy.

"DL EMPTY": No driver's license information was provided. Attendant 42 may not have entered appropriate information in field 662 in Figure 9d.

For the report shown in Figure 9g, the credit and fraud check has failed for applicant 40. As described earlier, attendant 42 verify and amend the application information of applicant 40, where issues have been raised by the credit and fraud report and resubmit the credit and fraud check request.

However, if there are no notable changes to the application information, the application process is terminated. Accordingly, an appropriate information letter outlining the issues with the credit check can be generated by transaction interface unit 64(3) and provided to applicant 40. Figure 9h shows screen 670 which prompts attendant 42 to print the report or not. In most circumstances, attendant 42 will have the report printed. However, for credit declines only a generic decline report is printed and provided.

### Define the Product (214)

As shown in Fig. 8d, a process is provided to open each approved account identified by depository system 60 which applicant 40 wishes to open. For each product type, basic information regarding applicant 40 must be associated with the product, checks must be issued, if appropriate, and documentation must be signed. The flow of events is shown at 400.

Starting at 402, to open a specific product type, attendant 42 gets applicant 40 to choose one of the products from the approved list. For the product type chosen, basic personal information is entered into kiosk terminal software 45 at event 404. If checks are required for the product, they are ordered at events 406 and 408. Any other information necessary to complete the product definition is entered into kiosk terminal software 45 at event 410. The entered information is verified by attendant 42 with applicant 40 at event 412 and the information is uploaded to the transaction interface unit 64(3) at event 414.

At this time, any other products which applicant 40 is approved are offered to applicant 40, and if any are selected, the process starts again for the other product at event 420. If applicant 40 has a transaction account then it is selected from the list of approved products and basic information for the transaction account is entered into depository system 60. See events 420, 422 and 424. If no transaction account is associated with applicant 40, then event 402 is performed, where applicant 40 selects his next account from his list of the approved accounts.

After the approved deposit product applications have been processed, credit products, such as a line of credit, are processed. If a line of credit account is not opened, then attendant 42 checks from depository system 60 whether applicant 40 is approved to open a certificate of deposit (CD) account. See events 424, and 426. If applicant 40 is approved to open a CD account, but does not wish to open one, ancillary processing of paperwork is performed at events 428 and 430. Attendant 42 collects the application documentation into suitable document kit for applicant 40. Necessary regulatory disclosures are also provided. The kit is presented and reviewed with applicant 40. The application process continues to set up electronic access at event 462.

If a CD account is approved by depository system 60 and is requested by applicant 40, then the CD account will be activated by depository system 60 upon reciept from applicant 40 of sufficient funds to cover its value. See event 434. If a line of credit is opened an income verification case is initiated by attendant 42 to kiosk terminal software 45. This causes a corresponding income verification request to be initiated and processed at local back office 84. See events 436 and 438. After the initialization of an income verification case, a CD application is processed (if any) at event 426 and continues as from the description of events following event 426 described above.

It can be appreciated that final document processing may be done at other events in the application process.

Figures 9i-9k show selected screen shots of kiosk terminal software 45 in the product definition stage of an application. Figure 9i shows Sales Profile Screen 680 after the credit check has finished and applicant 40 has passed the check. Kiosk terminal software 45 informs attendant 42 of the approved products made available to applicant 40 by changing the colour of the field associated with the requested product. Colours for fields 682, 684, 686 and 688 have been darkened by kiosk terminal software 45. Accordingly, applicant 40 is approved to open a savings product, a certificate deposit product and a 12 month jumbo certificate. Applicant 40 is not entitled to overdraft protection, a Visa™ check card nor a personal line of credit. Accordingly, fields 690 and 692 remain unchanged in colour. It can be appreciated that different visual and reporting mechanisms may be used to indicate what products are approved and not approved.

It can be appreciated that the process of identifying a selection of approved products for a particular applicant requires specialized knowledge of risk assessment. Depository system 60 incorporates processing of such matters, relieving attendant 42 of making this assessment.

At this time, attendant 42 may advise applicant 40 of the approved products from the requested list. Continuing with the example, applicant 40 has selected a non-interest checking product. Referring to Figure 9i, attendant 42 selects the product by activating box 646 beside the product in field 682. Kiosk terminal software 45 indicates on terminal 44 that the product has been selected by changing the background colour for field 682. In the present embodiment of the invention, it is made blue. To continue, Open button 694 is selected.

Referring to Figure 9j, tabs 700 allow attendant 42 to access various screens associated with the product sales. In this particular instance, Basic Info screen 702 is accessed. Basic Info screen 702 has fields 704, allowing entry of further information necessary from applicant 40 to complete the product application. Once all relevant fields have been filled, Okay button 706 is activated by attendant 42.

If any deposit slips or checks are required for the selected product, attendant 42 makes appropriate requests to transaction interface unit 64(3) for them (corresponding to event 408 in Figure 8d). Figure 9k a screen shot of Check Order (Chk Order) screen 710. As with other screens, information is entered in various fields 712, and then Okay button 714 is activated to process the check request to transaction interface unit 64(3).

Prior to transmitting application information to transaction interface unit 64(3), the information is verified by attendant 42 before it is sent. Legal documents, such as product documents, are signed and a copy of applicant 40's identification is taken.

To complete the qualification stage, attendant 42 may offer applicant 40 any information related to the approved products, corresponding to event 272 in Figure 8d. Accordingly, transaction interface unit 64(3) provides a streamlined process for ensuring that all available product types are identified to attendant 42. In the present example, although applicant 40 simply wanted a non-interest checking product, she is entitled to open a savings product and any certificate of deposit product. This is noted by darkened fields 684, 686 and 688 for those products in Figure 9i.

Accordingly, it can be appreciated that the preferred embodiment of the invention provides a depository system 60 allowing new applicants to open bank products without visiting a bank branch. Further, with depository system 60, attendants 42 processing the applications are relieved from making judgments on the financial aspects of the application. The streamlined process provides method to identify an appropriate selection of products with customized options without human assessment. Accordingly, attendants 42 at kiosks 30 do not require extensive training on financial and credit matters to assess new applicants for new products. Further, as depository system 60 provides legal notices to applicants 40, attendants 42 are relieved from having to know detailed aspects of legal issues associated with processing new products. Most importantly, the kiosk 30 is not a bank branch.

### Establish Electronic Access (216) and Assemble Product Documents (218 + 220)

For each type of product activated for applicant 40, attendant 42 issues appropriate electronic debit and check cards to applicant 40. Figure 8h provides a flow diagram of the process of the preferred embodiment of the invention used to establish electronic access for various products.

If applicant 40 already has electronic access to accounts, then the newly opened accounts are linked to appropriate electronic access systems. The electronic access systems include, bank cards, checking cards, debit cards, ATM cards, Internet access systems and telephone access systems. See events 500, 502 and 504.

If applicant 40 does not have electronic access to his products, then attendant 42 retrieves a blank access card from a stock of cards at kiosk 30 and uses kiosk terminal software 45 and card reader 46 to allow applicant 40 to program a PIN for his card. PIN processing, including a PIN offset calculation and VRU access is processed to kiosk terminal software 45 by attendant 42. See events 506, 508, 510, 512 and 514.

Applicant 40 may establish appropriate VRU passwords and access at event 516. Check card access is established, if required, at events 518 and 520. ATM access is verified at event 522. Local back office 84 processing includes providing appropriate welcome kit for Internet account at event 524 and providing personalized checking card at event 526. The process continues to the next stage as noted at event 528.

The main steps for establishing the product for depository system 60 have been completed. The approved products are active, subject to any limitations in place for specific products, and applicant 40 can access his products through any of the access systems associated with the products. If a personal line of credit (PLC) is provided to applicant 40, at this time, the PLC is opened, but initially with no credit associated with it. Once a credit specialist in the local back office 84 may verify the income of applicant 40, approved credit amounts will be provided to the PLC.

Once electronic access for opened accounts has been completed, applicant 40 may leave kiosk 30. To complete processing of opened accounts, attendant 42 packages and forwards all original application documents to local back office 84 of transaction interface unit 64(3) for processing and storage. Attendant 42 has completed all steps in processing an application for new products and can respond to new queries and applications from other applicants 40. See events 218(1), 218(2) and 218(3) in Figure 8a.

When documents are received at the back office, they are verified against the information in depository system 60 at event 220. Amendments to the files are made as necessary. Depository system 60 has completed processing of the application for applicant 40.

Following is more detail on processing applications by the transaction interface unit 64(3), for the preferred embodiment of the invention. The products available to applicant 40 follows one of four processing paths: Standard, Student, Youth, and Non-Resident. The Standard path is the default path. The Student path is used for applicants currently enrolled full-time in a post-secondary education institution. The Youth path is for applicants who have not reached the age of 19, although the age threshold is adjustable. The Non-resident path is for applicants who do not have a permanent address within the United States. It can be appreciated that other or different classes may be created or used.

Each path utilizes the same processing sequence to determine what products are available to applicant 40. However each path may have differentiated thresholds for types of products available and options available within a type of product. For each path a decision matrix may be used to analyze the application. Table 1 shows sample available products for each path:

**Table 1:**

| **Products Allowed for Product Paths** | | | |
|---|---|---|---|
| | | | |
| Checking | Checking | Checking | Checking |
| Check Card | Check Card | Check Card | Check Card |
| | Overdraft | Overdraft | Overdraft |
| | | | Line of Credit |

For the preferred embodiment of the invention, transaction interface unit 64(3) identifies the appropriate path from the age, residence and status information from the CIF 10 of applicant 40. If applicant 40 requested a product type that is not available in that path, then processing is terminated and an error message is sent to the terminal 44. For joint product applications, attendant 42 must ensure that the products requested by each applicant 40 are identical.

During processing of an application, the results of the credit and fraud reports are used by transaction interface unit 64(3) to assess what products should be offered to applicant 40, if any, what restrictions are placed on the products, if any, and what line of credit is available to applicant 40, if any.

Using the credit report, the transaction interface unit 64(3) creates an exclusion criteria score, which processes negative credit events associated with applicant 40. These include records of bankruptcy (active, dismissed or discharged), liens, foreclosures, collections on file, garnishment, death or other notable events. These events are scored and the score with other items to identify the selection of products available to applicant 40.

Also, using aspects from the credit report, a decision matrix is utilized to determine what specific parameters are approved for each approved product type. Figure 10 shows a portion of a mock decision matrix for a standard product path. The following fields comprise the decision matrix:

| Field Name | Ref. No. | Description |
|---|---|---|
| Model | 800 | Identifies the path. Here it is the Standard Product Path (STAND) |
| Low Score | 802 | Identifies the low credit score for this decision set |
| High Score | 804 | Identifies the high credit score for this decision set |
| Decision | 806 | Indicates what products are approved for this decision set |

For the present example, assume depository system 60 determines a score of 63 for applicant 40 using the results of her credit report. Accordingly, her application falls into row 3, shown at 808. For row 3, the decision field provides applicants falling in that category with the following decisions: a checking product is approved (DD=Y), a check card is approved (CK=Y), VIP access of 2 is provided (VP=2), overdraft protection of $200 is authorized (OD=200) and a line of credit is of$100 provided (LC=100).

It can be appreciated that decision matrices for student, youth and non-resident paths, respectively may have similar fields, but different entries for their respective fields in order to accommodate different credit risk strategies for each category of applicant. It can be seen that the structure of the decision matrices may be similar, although the contents for each field may differ. It can be appreciated that the process for accessing and utilizing a decision matrix is the same for each path. It can also be appreciated that one or a series of decision equations may be used instead of a matrix to identify appropriate products, overdraft limits and credit limits for a particular applicant 40 for any or all of the paths.

Transaction interface unit 64(3) sends decision field results 810 to terminal 44 of attendant 42. Kiosk terminal software 45 displays the results on an appropriate screen as shown in Figure 9g. Thereafter, attendant 42 continues to process the applications, identifying to applicant 40 the products approved for him as well as any parameter restrictions.

For joint accounts, each member of the joint product is assessed by transaction interface unit 64(3). Transaction interface unit 64(3) evaluates the sets of allowed products for each applicant 40 and a single set of allowed products is generated, based on the results of the best applicant 40.

For joint product application, Listing 1 contains an algorithm which may be used by an attendant 42 to select products from the group of products:

### LISTING 1

1. If a checking product is approved for all applicants, proceed to step 2.
   Else, if none is approved for a checking product, no products are available as a joint product. Stop processing.
   Else, if one approved for a checking product, approve the joint product for a checking product. Stop processing.
2. If a check card is approved for both applicants or neither applicant, proceed to step 3.
   Else return approval for a check card. Stop processing.
3. If VIP code is equal for both applicants, proceed to step 4.
   Else, return approval for higher VIP code. Stop processing.
4. If overdraft protection level is equal for both applicants, proceed to Step 5.
   Else, return approval for higher overdraft amount of applicants.
   Stop processing.
5. If Line of credit for both applicants is equal, return this amount. Stop processing.
   Else, return approval for the higher line of credit for applicants. Stop processing.
   The line of credit may be overridden by a separate calculation.

It can be appreciated that the listing can be incorporated into the processing of the transaction interface unit 64(3).

From the above description, it can be appreciated that the process for identifying and opening depository accounts for applicants 40 has been streamlined. Attendants 42 processing the applications do not require extensive training on how to assess the financial situation of an applicant 40.

It can further be appreciated that the invention may comprise a system allowing automatic processing and opening of deposit accounts from remote terminals without any decision making involvement by attendant 42.

Figure 11 shows applicant 40 at home using Internet terminal 34 to apply for a banking product. Connection 38 links terminal 34 to depository system 60. The process of applying for a deposit account in this environment follows a similar process flow for applying for a banking product at a kiosk 30, as described earlier. However, in order to effect appropriate verification of the identify of applicant 40 (providing the similar function of attendant 42 obtaining and entering the driver's license particulars of applicant 40, as described earlier), digitial certificates may be used by applicant 40. After an appropriate digital certificate has been provided by applicant 40 to depository system 60 and verified by a trusted third party to positively identify applicant 40, depository system 60 may automatically process and approve any deposit accounts in the same manner as applications processed through kiosks. In this embodiment, the need for kiosks 30 may be eliminated.

It is noted that those skilled in the art will appreciate that various modifications of detail may be made to the preferred embodiments described herein, which would come within the spirit and scope of the invention as defined in the following claims.

## Claims

1. A deposit account application processing network comprising
an applicant system for receiving deposit account application information at a non-branch location from an applicant including applicant identification information and applicant's desired deposit product, and for transforming the applicant information into computer-readable deposit account application data,
an automated application processing system for processing the computer-readable deposit account application data from the applicant system, further comprising:
automated means for processing the received application data to create a computer-readable qualification request to determine whether or not the applicant is qualified for the desired deposit product;
automated means for processing a computer-readable response to the qualification request;
automated means for approving the deposit product based on the response to the qualification request; and
automated means for a deposit account for the approved deposit product, which deposit account is accessible by the applicant.

2. The deposit account application processing network of claim 1, wherein the applicant system further comprises a terminal at the non-branch location for entry of the application information, including verified identification information.

3. The deposit account application processing network of claim 2, wherein the terminal is operated by an attendant that verifies the identification information.

4. The deposit account application processing network of claim 2, wherein the applicant system is contained within a kiosk.

5. The deposit account application processing network of claim 4, wherein the kiosk also contains an ATM for receiving deposits for a deposit account and a telephone, and wherein the applicant system further comprises a telephone banking interface for accessing opened deposit accounts.

6. The deposit account application processing network of claims 4, wherein the kiosk also contains an Internet terminal for use by the applicant, and wherein the processing system further comprises an Internet banking interface for accessing opened deposit accounts.

7. The deposit account application processing network of claim 4, wherein the kiosk is located within a retail outlet.

8. The deposit account application network of claim 1, wherein the automated means for processing a response to the qualification request obtains and evaluates credit history information about the applicant.

9. The deposit account application network of claim 8, wherein the automated means for processing a response to the qualification request evaluates the applicant information against fraud parameters.

10. The deposit account application processing network of claim 1, wherein the applicant system further comprises a terminal at the non-branch location for entry of deposit account application information and automated means for verifying identification information of the applicant entered by the applicant at the terminal.

11. The deposit account application processing network of claim 1, wherein the deposit account is a bank deposit account.

12. The deposit account application processing network of claim 1, further comprising no branch locations.

13. An automated application processing system for opening a deposit account, the processing system for use in association with an applicant system that receives deposit account application information from an applicant at a non-branch location including applicant identification information, and a desired deposit product and that transforms applicant information into computer-readable deposit account data, the processing system comprising:
an input for receiving computerized deposit account application data from the applicant system;
automated means for processing the received application data to create a computerized qualification request to determine whether or not the applicant is qualified for the desired deposit account; and
automated means for processing a response to the qualification request.
automated means for authorizing the desired deposit account to the applicant based on the response to the qualification request;
automated means for opening an authorized deposit account for access by the applicant.

14. A method for processing a deposit account application comprising
receiving a customer application request at a non-branch location from an applicant including applicant identification information and applicant's desired deposit product;
transforming applicant information into computer-readable deposit account application data;
automatically qualifying the customer application request by processing the computerized deposit account application data, automatically qualifying the customer application request comprising:
automatically creating a computer-readable qualification request to determine whether or not the applicant is qualified for the desired deposit product;
automatically processing a computer-readable response to the qualification request; and
automatically approving the desired deposit product based on the response to the qualification request, and
automatically opening a deposit account for the approved deposit product, which deposit account is accessible by the applicant.

15. The method for automatically processing a deposit account application as claimed in claim 14, wherein qualifying the customer application comprises obtaining and evaluating credit history information about the applicant.

16. A method for processing a deposit account application comprising
receiving an application request for an applicant to open a desired deposit product;
automatically qualifying a computer-readable deposit account application request for an applicant at a non-branch location by processing computer-readable deposit account application data, the step of automatically qualifying the customer application request comprising:
automatically creating a computer-readable qualification request to determine whether or not the applicant is qualified for the desired deposit product;
automatically receiving a computer-readable response to the qualification request;
automatically approving the desired deposit product based on the response to the qualification request; and
automatically opening a deposit account for the approved deposit product, which deposit account is accessible by the applicant.
